# EUROPEAN PATENT APPLICATION

(11) **EP 2 400 439 A1**
(43) Date of publication of application: **28.12.2011**
(21) Application number: 10006690.1
(22) Date of filing: 28.06.2010
(51) Int. Cl.: G06Q 10/00

(54) **Providing information about a data item**

(71) Applicant: Vodafone Holding GmbH, 40213 Düsseldorf (DE)
(72) Inventor: Nieuwerth, Marielke, Gasselternijveen 9514 BE (NL); Knight, John, Rickmansworth Herts WD3 8ND (GB)
(74) Representative: Jostarndt, Hans-Dieter

(57) **Abstract**

The invention relates to a method for providing information about a data item. In the method, actions performed by at least one user with a copy of the data item in connection with information given by the user are analyzed, at least one keyword is generated for each analyzed action based on the information, and the keywords are added to a metadata list associated with the data item. Furthermore, the invention relates to a computer program and to a system for performing the method.

## Description

The invention relates to the provision of information about a data item. More specifically, the invention is related to a method and a system for providing information about a data item and to a computer program performing the method. In particular, the information is so called metadata associated with the data item.

In our days, users of data processing systems dispose of a growing plurality of different data items of various kinds, especially multimedia content, such as pictures or video clips. This is particularly due to the growing access to external sources for receiving data items, such as network sources, specfically the internet, and the growing use of electronic peripheral devices like digital cameras. In order to allow the users to facilitate the use of their data, particularly the review and the relocation of data, appropriate techniques for managing the data items have to be implemented.

One mechanism for helping the users to manage their data is the utilization of so called metadata. The metadata include keywords - so called tags - associated to the data item which describe the content or indicate a word, phrase, acronym or the like pertinent to aspects of the content. The metadata allow categorizing data items and may also be relied on by certain search functions which enable the user to search for data items including specific keywords in the metadata associated to the data items.

The metadata may already be generated by the provider of a data item to provide a short description of the content to the recipient. However, in order to use such metadata, the user has to rely on the provider .to select tags which are meaningful to the user. Otherwise, the tags are only of little value for the user. Likewise, the metadata may be generated manually by the user. This ensures that meaningful tags are associated with the data items, but is quite cumbersome for the user. Therefore, there is a need for a facilitation of the generation of metadata for the users.

US 2009/0006285 A1 describes a content-based tagging of RSS feeds and e-mails. For received items of e-mail or syndication formatted communication, tags are generated automatically based on a filtering of content relevant to communication, a sender, a recipient or combinations thereof, and the tags are attached to the received items.

Although, this method disburdens the user from manually generating tags for certain items of communication, it is limited to special data items and to the receipt of such items. As a consequence, there is a multitude of data items that cannot be tagged using the method, particularly data items which a user does not receive through a communication service of the aforementioned type or which are received together with a poor description, which does not allow for extracting meaningful tags.

It's an object of the present invention to allow for determining more extensive metadata for a data item.

The object is achieved by a method according to claim 1, by a computer program according to claim 9 and by a system according to claim 10. Embodiments of the method, the computer program and the system are given in the dependent claims.

According to a first aspect of the invention a method for providing information about a data item is provided. In the method, actions performed by at least one user with a copy of the data item in connection with information given by the user are analyzed, at least one keyword is generated for each analyzed action based on the information, and the keywords are added to a metadata list associated with the data item.

According to a second aspect, a system for providing information about a data item comprises a storage unit in which a metadata list associated with the data item is stored and at least one analyzing component adapted to analyze actions performed by at least one user with a copy of the data item in connection with information given by the user and to generate at least one keyword for each analyzed action based on the information, the analyzing component being further adapted to add the keywords to the metadata list.

According to a further aspect of the invention, a computer program is suggested. The computer program includes code for performing the method or its embodiments disclosed herein, when the program is executed on a processor.

It is an advantage of the invention that various actions performed by at least one user with at least one copy of the data item in its course of use are analyzed in order to determine metadata for the data item. In particular, various successive actions performed with the copy of the data item are considered. Hereby, the automatically generated metadata are successively enriched in the life cycle of the data item. Moreover, data items which are often used and which may be more important are provided with extensive metadata. And, it is not necessary to perform one specific action with the data item in order to generate metadata.

The keywords may be any terms which are generated in connection with the actions performed with a copy of the data item. In particular, a keyword may include a description of the data item. Moreover, a keyword may relate to a relationship between the data item and a user or other entity, such as, for example, the recipient or sender of a message including the data item, or may specify a link to one or more further data objects.

Preferably, the actions which are analyzed in order to generate metadata are taken from a group of predetermined actions. Therefore, in one embodiment of the method and the system, actions performed with a copy of the data item are monitored and an action is analyzed in order to generate a keyword, if it is determined that the action belongs to the group of predetermined actions. In particular, this allows specifying criteria for a number of actions according to which metadata can be determined based on the actions.

In one embodiment of the system and the method, the group of predetermined actions includes actions in which the user performing the action links information to the copy of the data item. Particularly, this may be done by entering and/or editing information to be associated to the copy of the data item or by associating the copy of the data item to existing information. Advantageously the content can be used to determine keywords which are included in the metadata list of the data item.

A further embodiment of the method and the system provides that the actions include making the data item available to at least one further user, the information comprising a specification of a recipient and/or at least a portion of content entered by the user when performing the action. It has been revealed that a user often comments on the copy of the data item, he makes available to others. Advantageously, the content generated in order to comment on the copy of the data item can be used to determined metadata describing the data item. Furthermore, the recipient of the copy of the data item may also allow for categorizing or searching for the data item. Therefore, information about the recipient is also considered in order to generate metadata for the data item. If an entry in a contact list is associated to the recipient, the keyword may refer to the entry in the contact list so that a link between the entry and the data item is established.

In one embodiment of the method and the system, the action may include sending and/or posting a message including the copy of the data item, the content being included in a predetermined part of the message. In particular, a message may include predetermined fields, such as a subject or a recipient field, from which metadata may be determined. In one implementation, the subject of a message which is entered into the respective message field is extract to determine a keyword which is added to the metadata list associated to the data item. Likewise, the text of the message may be analyzed in order to determine such keywords.

In a further embodiment of the method and the system, the action includes specifying a name of a file representing the copy of the data item. Such file names often describe the data item in a meaningful way. Therefore, the file names are information which may be used to determine meaningful keywords for describing the data item.

In order to generate metadata, the actions one user performs with the metadata may be analyzed. However, a plurality of users may access at least one copy of the data item and may perform actions with the copy. In this case, the actions of various users may be analyzed in order to determine metadata. Hereby, more extensive metadata can be generated. In one related embodiment of the method and the system, a keyword is only added to the metadata list based on an action performed by a user, if an authorization of the user to generate metadata has been verified. Preferably, this authorization is independent from an authorization to access the copy of the data item. Hereby, it can be specified that (only) actions of specific users are considered for generating metadata.

There may be one copy of the data item with which actions are performed based on which metadata is generated. This copy may be stored in the storage unit which also stores the metadata list associated to the data item. However, there may also be various copies which may also be stored at different locations, particularly in different storage units.

In view thereof, in one embodiment of the method, the actions which are analyzed to generate metadata are performed using a plurality of copies of the data item, each copy being stored in a different storage unit in association to a unique identifier of the data item, the metadata list being identified using the identification, when a keyword generated in response to an action is added to the metadata list. One embodiment of the system provides that the actions are performed with a plurality of copies of the data item, the copies including a unique identifier of the data item, and the metadata list is identified using the identifier, when a keyword generated in response to an action is added to the metadata list.

Advantageously, these embodiments allow analyzing actions performed with various copies of the data item in order to automatically generate metadata. Hereby, it is also possible to generate more extensive metadata. Advantageously the keywords determined based on the actions are stored in one metadata list, which is identified using the identifier associated to the data item. Thus, one user which accesses the metadata list can use metadata which are generated based on actions performed with various copies of the data item which may also be stored at various locations, particularly in various storage units. The identifier particularly allows to identify the data item also in case a copy of the data item is stored in a file having another name than the copy of the data item to which the metadata list is (directly) associated.

Furthermore, in one embodiment of the method and the system, the storage unit is included in a web server, the user accessing the server for performing the action via a data network. In particular, this allows automatically generating metadata within the scope of a so called web service used for performing actions with a copy of a data item.

In a further embodiment of the method and the system, the analyzing component is linked to an application for performing an action with the data item in such a way that the application invokes the component when an action with the data item is performed. Here, the analyzing component and the application may be implemented in one device or in separate devices which are connected to each other. The connection may also be established through a network. This allows analyzing actions which are performed using application executed at remote locations.

The aforementioned and other aspects of the invention will be apparent from and elucidated with reference to the embodiments described hereinafter making reference to the accompanying drawings

In the drawings,
- Fig. 1: is a schematic depiction of one embodiment of a system for providing information about a data item,
- Fig. 2: is a diagram schematically showing a worked example of an automatic addition of metadata to a data item and
- Fig. 3: is a schematic depiction of a further embodiment of a system for providing information about a data item.

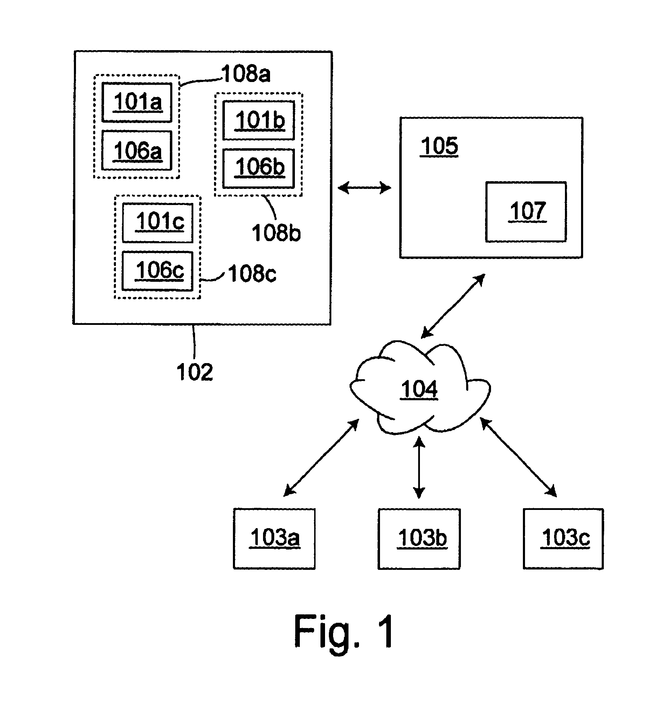

As schematically shown in figure 1, one or more user(s) may access and use a plurality of data items 101 i (i = a, b, c) three of which are shown in the figure by way of example. The data items 101i may include data of any kind. In particular, the data items 101 i may comprise multimedia content, such as, for example, pictures or video clips. In the embodiment depicted in figure 1, the data items 101i are stored in a storage unit 102, which is accessible by one or more user(s). By way of example, in the depiction of figure 1, three users are assumed, although any number of users is possible.

A user accesses the data items 101i in the storage using a user device 103j (j = a, b, c). Such user device 103j may be configured as an essentially stationary device, such as, for example, a PC (Personal Computer) or as mobile devices, such as, for example, a mobile phone, a PDA (Personal Data Assistant), a notebook computer or the like. In one embodiment, the storage unit 102 may be assigned to a user device 103j of one user. In this case, the user devices 103j of possible other users may be connected to the storage unit 102 via a network.

In another embodiment, which is schematically depicted in figure 1, all clients access the data items 101i via one or more network(s) 104 through a server computer 105 to which the storage unit 102 is connected. The network 104 may be a local network or a wide area network, such as the Internet. In one implementation of the this embodiment, the server computer 105 provides a so called social network service or another web service and particularly provides to one of the users so called web space for storing data items 101 i of the user. Here, the user utilizing the web space is the owner of the data items 101 i and may allow the further users to access the data items 101 i.

However, both embodiments described before may be implemented in various different ways. For instance, the storage unit 102 may be assigned to a private user device 103j of a user, or the users may be employees of a company and access the storage unit 102 through a company network 104.

To each data item 101 i a metadata list 106i (i = a, b, c) is associated including metadata assigned to the data item 101 i. In the embodiment depicted in figure 1, the metadata list 106i is included in a file 108i together with the data item 101i. However, it is likewise possible that the metadata list 106i and the data item 101i are included in separate files and linked to each other appropriately. In the metadata list 106i of a data item 101 i entries are being stored, which correspond to keywords associated with the data item 101 i and which are also referred to as tags herein.

Users access the data items 101i in the storage unit 102 using one or more software applications which are executed in the server 105 and/or the user devices 103j of the users. A software application provided by the server 105 may particularly be configured as a web service, which is accessed by the user devices 103j through the network 104. Such an implementation may particularly be selected, when the data items 101i are accessed in connection with a social network service provided by the server computer 105.

At least one software application used by at least one user may be configured to access and evaluate the metadata lists 106i of the data items 101i. The application may be group or categorize the data items 101i according to the tags included in the metadata lists 106i. This may be done is such a way that the data items 101 i to which certain tag is assigned may be included in one group. In addition or as an alternative, the application may allow searching for data items 101 i based on one or more tag(s). For this purpose, a user may enter one or more tag(s) or select the tag(s) from a list of available tags presented by the application, and upon the specification of the tag(s), the application presents the data items 101i to which the specified tag(s) are assigned.

Further software applications are provided for performing actions with the data items 101 i. In particular, the software applications allow for performing actions which are analyzed in order to determined metadata for the data items 101i. Examples of such actions will be given below.

A user may assign a tag to a data item 101 i manually by editing the metadata list 106i of the data item 101 i using the user device 101. However, tags are also generated and included in the metadata lists 106i automatically during the use of the data items 101i by the users.

For the automatic generation of tags, at least one analyzing unit 107 is provided which is enabled to access the storage unit 102 and the metadata lists 106i of the data items 101 i stored therein. The analyzing unit 107 interacts with applications used for performing actions with the data items 101i. As it is depicted in figure 1, there may be a central analyzing unit 107 included in the server computer 105. Such central analyzing unit 107 is especially advantageous, when the server computer 105 also provides applications for performing actions with the data items 101 i. However, also in case these applications are executed in the user devices 103j of the users, there may be a central analyzing unit 107 with which the distributed applications communicate. In another embodiment, a central analyzing unit 107 may be integrated into one of the user devices 103j and the analyzing unit 107 may communicate with application for performing actions with the data items 101i i which are executed in the user device 103j hosting the analyzing unit 107 and with the applications executed in the other user devices 103j. Furthermore, in an alternative embodiment, there may be an analyzing unit 107 included in each user device 103j. Each analyzing unit 107 preferably communicates with the applications executed in the local user device 103j for performing actions with the data items 101 i.

The actions from which metadata is obtained comprise predefined actions which are executed by means of the aforementioned applications. Preferably, it may be the applications that identify a relevant action. For this purpose, the applications may be connected to or include a catalogue specifying the relevant actions. After having identified a relevant action, an application may notify the analyzing unit 107 assigned to the application so that the analyzing unit 107 may determine metadata from the action. If all actions that can be performed with one application are relevant for determining metadata, each action preferably leads to an interaction between the application and the analyzing unit 107 for determining metadata.

In a further embodiment, the analyzing unit 107 may monitor data items 101i in view of the actions performed with them and identifies the relevant actions which are used for determining metadata. Or, the analyzing unit 107 monitors applications assigned to the analyzing unit 107 in order to identify the relevant actions with the data items 101 i performed by means of the applications. When the analyzing unit 107 is provided for identifying actions from which metadata is generated, the analyzing unit 107 is connected to or includes the catalogue of the predefined actions which are considered for generating metadata.

In one embodiment, metadata may be determined from actions of all users which are able and/or authorized to access the data items 101 i stored in the storage unit 102. This means that the determination of metadata for a data item 101 i is coupled to the authorization to access the data item 101 i in the storage unit 102 and to perform actions with the data item 101 i. However, in another embodiment an action performed with a data item 101 i by a user is only considered for determining metadata when the user has the authorization to generate metadata. This authorization is independent from the authorization to access the data item 101 i.

The authorization to generate metadata may be verified by the analyzing unit 107, when the analyzing unit 107 is notified about an action by an application or when the analyzing unit 107 determines that an action is made due to the monitoring of the data items 101i. The verification of the authorization to generate metadata in the analyzing unit 107 has the advantage that the authorizations can be managed centrally. As an alternative, the applications may verify the authorization, when an action is performed with a data item 101i. This is particularly advantageous, if the relevant actions are identified by the applications. In order to be able to manage the authorizations centrally, they may be stored in a central database which the applications access when verifying the authorizations.

When it is determined that one of the predetermined actions is performed with one of the data items 101i the action is analyzed to obtain metadata from the action. The determined metadata are added to the metadata list 106i associated to the relevant data item 101i. Since metadata are preferably determined from each relevant action performed with a data item 101i, the metadata list 106i of the data item 101 i is essentially continuously supplemented with new keywords. In particular, when a first one of the predetermined actions is performed with an data item 101 i, metadata may be determined from the first action and added to the metadata list 106i of the data item 101i, and when a second one of the predetermined actions is performed with the same data item 101 i thereafter, metadata may also be determined from the second action and added to the metadata list 1 06i of the data item 101 i.

The predetermined actions comprise actions in which a user inputs information in connection with the data item 101 i. The input may be a manual input entered by the user. However, also automatic inputs may be considered in order to determine keywords.

The inputs may be made in predetermined fields of a form which is filled in, when performing the action. Examples of such fields are the fields for specifying the subject, the addressee or the sender, when composing a message to which the relevant data item 101 i is attached, such as, for example an e-mail message. When such fields are filled in the keywords entered into one or more predetermined field(s) may be added to the metadata list 106i of the data item 101 i. For this purpose, the analyzing unit 107 may evaluate the fields in order to extract their content, which is then stored in the metadata list 106i. The relevant fields may be predetermined individually for different actions. It is an advantage of evaluating predetermined data fields that information is analyzed which is classified by means of the data field so that relevant metadata can be identified easily and reliably.

In addition to the evaluation of predetermined data fields, it may also be provided that further, essentially unclassified information, which is entered by a user, may be evaluated for determining keywords that are added to the metadata list 106i of a data item 101 i. The information may be input in a predetermined field but may include a longer text so that it cannot be adopted as a keyword directly. An example of such unclassified information is the text of a message to which a data item 101i is attached or of a document in which a data item 101i is embedded. The evaluating may be done by means of an automatic text evaluation, which may include text parsing, i.e. extracting of the most relevant terms using, for example, statistically based information retrieval techniques, or text abstraction, i.e. interpreting the text semantically. For instance, the analyzing unit 107 may assign to a data item 101 i a keyword, which is a generic term of terms included in the text. Thus, if the text includes terms such as, "journey", "flight", "hotel", "pension", "weather", "sun" and the like, the keyword "holiday" may be assigned to the data item 101 i.

The predetermined actions may include one or more of the actions from the group including specifying a name of a file 108i including the data item 101i, adding the data item 101i to a collection, sending, posting, embedding and sharing the data item 101i. i. These actions and the determination of keywords from these actions will be explained in the following. However, it is to be understood that further or other actions can be included in the set of predetermined actions for determining metadata.

Specifying a name of file 108i refers to the generation or change of the name of the file including the data item 101i. i. Each time a user names or renames the data item 101i or the file including the data item 101i, the name may be added as one keyword to the metadata list associated to the data item 101i.

An addition of the data item 101i to a collection may include storing the data item 101i in a directory having certain name within the storage unit 102 or adding the data item to an album having a name, such as, for example a web page or other collection. When a data item 101 i is added to a collection, the name of the collection may be added as a keyword to the metadata list 1β6 associated to the data item 101 i.

Sending includes the transmission of a data item 101 i to one or more recipient(s) in a message using a messaging service. Here, the data item 101 i may be attached to the message in a way that is known to a person skilled in the art. Examples of messaging services that can be used are e-mail, instant messaging or chat, SMS (Short Message Service) and MMS (Multimedia Messaging Service). As described before, the keywords to be added to the metadata list 106i associated to the data item 101i may be extracted from predetermined fields of the message, particularly the "subject" field and also the field specifying the recipient(s). In addition, the text of the message may be evaluated in a way described before in order to determine one or more keywords.

If the recipient is included in a contact list of the user, which may be stored in the user device 103j of the user sending the message, for example, the keyword relating to the recipient may refer to the entry of the recipient in the contact list. In particular, a link may be established. The links to a contact entry may allow determining the data items 101 i which are related to the contact.

Posting particularly refers to a publication of the data item 101 i within an Internet forum, a weblog or another webpage. When the data item 101 i is posted, a title may be added to the post and/or a caption or labeling may be added to the data item 101i by a user composing the posting. Such information is usually configured as classified information similar to the aforementioned data fields of messages. The information or single terms extracted from the information may be added as keywords to the metadata list 106i associated to the data item 101i. In addition, the posting may include a user generated unclassified text which may be evaluated in order to determined one or more keywords to be added to the metadata list 106i of the data item 101i. Posting a data item 101 i may include adding the data item 101i to a collection. In this case, the name of the collection is also added to the metadata list 106i.

Embedding relates to the embedding of the data item 101i into a document, such as a presentation, an article, a brochure or a similar publication. Similar to the posting, keywords may be determined from the title of the publication or a chapter thereof which includes the data item 101 i, from a caption of a data item in the publication, from the name of the document and/or from unclassified text of the document. The determination of keywords in connection with the embedding of a data item 101 i into a publication of the aforementioned type is advantageous, when the data item 101 i is used in a working environment in which such publications are generated.

Sharing a data item 101i relates to the process of providing other users access to the data item 101 i through the network 104. When a user shares a data item 101i with others, the user may provide a title or a comment relating to the data item 101 i to be shared. This information may be evaluated in order to determine one or more keywords for adding to the metadata list 106i associated to the data item 101 i. A data item 101 may be shared using an application which provides input fields for composing or editing the title and/or the comment. In this case, the title and/or the comment are classified information, which can be extracted without having to evaluate a text semantically. As a posting of a data item 101 i, sharing a data item 101 i may include adding the data item 101 i to a collection. In this case, the name of the collection is likewise added to the metadata list 106i.

Since various actions are considered for generating keywords that are added to the metadata list 106i associated to a data item 101 i, one keyword may be determined repeatedly. Preferably, in this case the keyword is added to the metadata only once. For this purpose, after having determined a keyword to be added to the metadata list 106i of a data item 101i, the analyzing unit 107 may check, whether the keyword is already included in the metadata list 106i. If this is the case, the analyzing unit 107 discards the determined keyword. The keyword is added to the metadata list, when the analyzing unit 107 determines that the keyword is not present in the metadata list 106i.

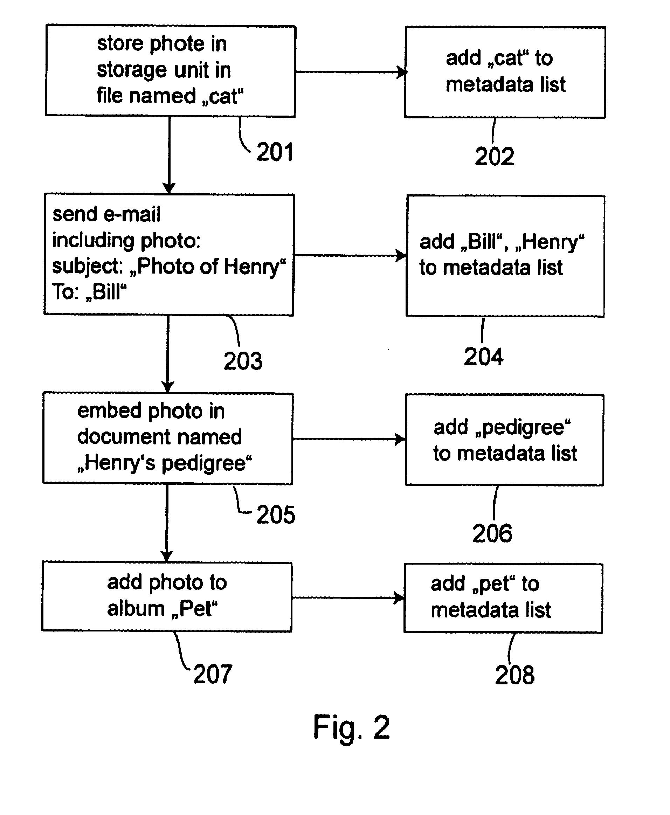

In the following, with reference to figure 2 a worked example will be explained, in which several keywords are automatically generated and assigned to a data item 101 i. In this example, the data item 101i is a photograph of a user's cat named "Henry". On day one, the user stores the photograph in the storage unit 102 in a file that he names "cat" (step 201). In response to this action, the keyword "cat" may be added to the metadata list associated to the photograph in step 202. On day two, the user sends an e-mail including the photograph to his friend Bill in step 203. The e-mail includes the subject line "Photo of Henry". The sending of the e-mail may lead to an addition of the terms "Bill" and "Henry" to the metadata list 106i assigned to the photograph (step 204). Moreover, the photograph is embedded into a document, which is named "Henry's pedigree" in step 205. Since the term "Henry" is already present in the metadata list 106i, this action leads to the addition of the term "pedigree" to the metadata list 106i in step 206. In step 207, the photograph is added to a website including an album named "Pets". In response thereto, the keyword "pet" is added to the metadata list 106 associated to the photograph. Thus, after having performed the actions in steps 201, 203, 205 and 207 the automatically generated metadata list 106i associated to the photograph reads "cat, Henry, Bill, pedigree, pet".

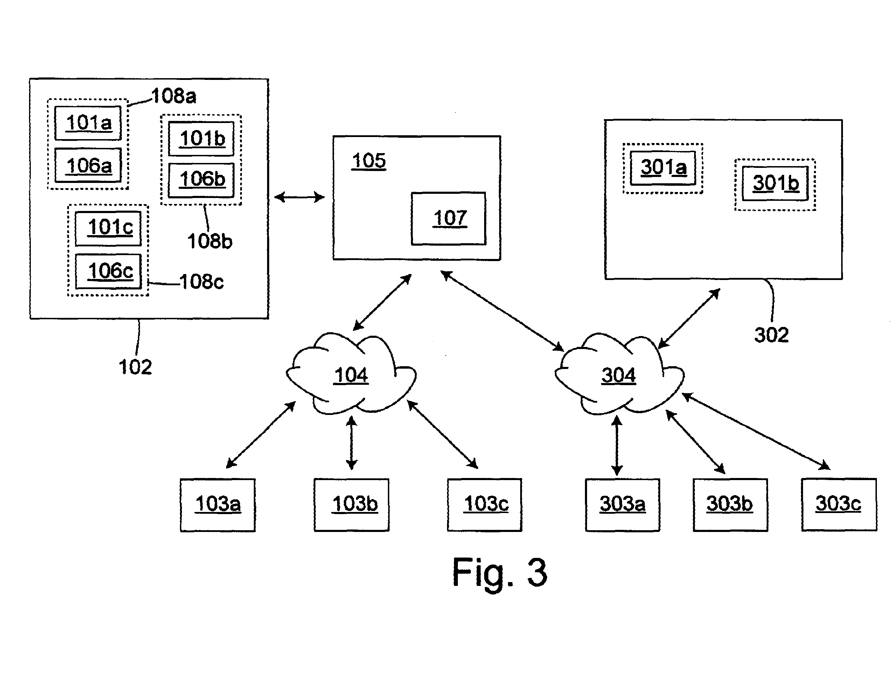

In the embodiments described before, metadata have been determined from actions which are performed with the copy of a data item 101 i that is stored in the storage unit 102. However, duplicates 301 i of a data item 101i may exist with which actions may be performed which are also appropriate for automatically generating metadata. For instance, such duplicates 301i of the data item 101 i may be generated when the data item 101 i is sent to another user, who stores the received copy of data item 101i in a further storage unit 302. In the following, embodiments are described with reference to figure 3 which allow determining metadata based on actions performed with duplicates 301 i of a data item 101 i which are stored at another location than the copy of the data item 101 i to which metadata data are added.

Figure 3 shows the system of figure 1 including the storage unit 102, the user devices 103j for accessing the storage unit 102 and the analyzing unit 107 described before. In addition, the system depicted in figure 3 includes a remote storage unit 302 which stores duplicates 301 i (i = a, b) of the data items 101 i. It is to be understood that in general the remote storage unit 302 may not store duplicates of all data items 101 i stored in the storage unit 102. Rather, the remote storage unit 102 may store duplicates 301 i of one or more single data items 101 i. By way of example, in figure 3, two duplicates 301 i are shown which are stored in the remote storage unit 302.

The remote storage unit 302 and the data stored therein are accessed by users using further user devices 303j (j = a, b, c). The user devices 303j may be connected to the remote storage unit 302 through a network or at least some of the user devices 303j may be connected to the remote storage unit 302 directly. The network may be the network 104 which connects the user devices 103i to the server computer 105 or, as depicted in figure 3, a further network 304. For performing actions with the data stored in the remote storage unit 302 one or more applications are provided. The applications may be executed in the user devices 303j or in a server unit which is connected to the remote storage unit 302 and which is not depicted in figure 3.

The applications for performing actions with the data stored in the remote storage unit 302 are also connected to the analyzing unit 107, which automatically generates metadata for the data items 101i stored in the storage unit 102. In principal, when an action is performed with a duplicate 301 i of a data item 101 i, the application for performing the action interacts with the analyzing unit 107 in the same way as an application that performs an action with a data item 101 i stored in the storage unit 102. If the action is one of the predetermined actions, the analyzing unit 107 determines one or more keyword(s) from the actions and adds the keywords to the metadata list 106i associated to the data item 101i the duplicate 302 of which the action was performed with. The predetermined actions and the procedures for determining the keyword(s) may correspond to the actions and procedures which already have been described before in connection with the actions performed with the data items 101 i in the storage unit 102.

However, some changes are implemented and/or additional functionalities are used in order to generate metadata based on actions performed with duplicates 301 i of the data items 101 compared with the generation of metadata based on actions performed with the data items 101 i themselves.

In particular, the duplicates 301i may be marked as such. Moreover, information to contact the analyzing unit 107 may be allocated to the duplicates 301i to allow the applications performing actions with the duplicates 301i to interact with the analyzing unit 107. In one embodiment, this information may be included in the files comprising the duplicates 301 i and may also serve to mark the duplicates 301 i as being duplicates of data items 101 i. However, it is likewise possible to link the marking and the information to the duplicates 301 i in another way.

Furthermore, to the data items 101i unique identifiers may be allocated which are also assigned to the duplicates 301i of the data items 101i. These identifiers, which may also be stored in the files of the duplicates 301 i, may be used to assign a keyword which is determined based on an action performed with a duplicate 301 i of a data item 101i to the data item 101 i. In particular, the identifier may be transmitted to the analyzing unit 107, when an action performed with a duplicate 301 i is reported, and the analyzing unit 107 may identify the data item 102 to which the metadata determined based on the action is added using the identifier.

Thus, in one embodiment, metadata for a data item 101i may be generated based on an action performed with a duplicate 301 i of a data item 101 i in the following way:
A relevant action may be identified by an application used for performing the action (when the action is performed with a duplicate 101 stored in a remote storage unit 302, the identification of the relevant actions by the applications may be preferred over the identification by the analyzing unit 107). Due to the marking, the application recognizes that the data object with which the action is performed is a duplicate 301a. Thereafter, the application reads the information for contacting the analyzing unit 107 and notifies the analyzing unit about the action. The notification may include the relevant information which can potentially be used to determine one or more keyword(s). Moreover, the notification may include the identifier assigned to the data item 101i, which may be read by the application.

When the analyzing unit 107 receives the notification, it evaluates the action in the same way as an action performed with a data item 101i stored in the storage unit 102 in order to determine one or more keyword(s). Furthermore, it uses the identifier included in the notification to identify the data item 101i and adds the keyword(s) to the metadata list 106i assigned to the identified data item 101 i.

In alternative embodiments, the keyword(s) may be determined based on the action by means of a remote analyzing unit which is allocated to the remote storage unit 302. In principle, the remote analyzing unit may determine the keyword(s) in the same way as the analyzing unit 107. In one embodiment, the remote analyzing unit may also determine metadata from actions performed with other data objects which are stored in the remote storage unit 302 which are not duplicates of data objects in another storage unit.

After having determined the keyword(s), the remote analyzing unit may transmit the keyword(s) to the analyzing unit 107 using the information for contacting the analyzing unit 107 which are assigned to the duplicate 301 i. Together with the keyword(s) the identifier read from the duplicate 301 i may be sent to the analyzing unit 107. When receiving the keyword(s), the analyzing unit 107 may identify the data item 101i using the identifier and add the received keyword(s) to the metadata list 106i of the data item 101 i. As an alternative, the remote analyzing unit 302 may access the data items 101i in the storage unit 102 directly or through the server computer 105 and may identify the data item 101 i itself and add the keyword(s) to the metadata list 106i assigned to the data item 101 i itself.

It is to be understood that the remote analyzing unit may add the keyword(s) also to a metadata list assigned to the duplicate 301i of the data item 102. In such a way, metadata can be added automatically to the duplicate 302i of the data item 101 i.

Furthermore, metadata which is determined based on actions performed with a data item 101 i may also be added to its duplicate 301 i. For this purpose, the analyzing unit 107 may notify the remote analyzing unit of actions performed with the data items 101 or of the keyword(s) determined based on such actions or it may store the keyword(s) in the metadata list assigned to the duplicates 301 i itself. In these embodiments, the aforementioned identifier may be used to identify a duplicate 301 i of a data item 101 i. Moreover, in allocation to the data item 101 i, information is stored that a duplicate 301 i of the data item 101 i exists and in which remote storage unit 302 it is stored and/or how to contact the remote analyzing unit assigned to the remote storage unit 302.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A method for providing information about a data item, wherein
actions performed by at least one user with a copy of the data item in connection with information given by the user are analyzed,
at least one keyword is generated for each analyzed action based on the information, and
the keywords are added to a metadata list associated with the data item.

2. A method according to claim 1, wherein actions performed with a copy of the data item are monitored and an action is analyzed in order to generate a keyword, if it is determined that the actions belong to a group of predetermined actions.

3. A method according to claim 2, wherein the group comprising the predetermined actions includes actions in which the user performing the action links information to the copy of the data item.

4. A method according to one of the preceding claims, wherein the actions include making the data item available to at least one further user, the information comprising a specification of a recipient and/or at least a portion of content entered by the user when performing the action.

5. A method according to claim 4, wherein the action includes sending and/or posting a message including the copy of the data item, the content being included in a predetermined part of the message.

6. A method according to one of the preceding claims, wherein the action includes specifying a name of a file representing the copy of the data item.

7. A method according to one of the preceding claims, wherein a keyword is only added to the metadata list based on an action performed by a user, if an authorization of the user to generate metadata has been verified.

8. A method according to one of the preceding claims, wherein the actions are performed with a plurality of copies of the data item, the copies including one identifier of the data item, and wherein the metadata list is identified using the identifier, when a keyword generated in response to an action is added to the metadata list.

9. A computer program including code for performing a method according to one of the preceding claims, when the program is executed on a processor.

10. A system for providing information about a data item, comprising a storage unit in which a metadata list associated with the data item is stored, and
at least one analyzing component adapted to analyze actions performed by at least one user with a copy of the data item in connection with information given by the user and to generate at least one keyword for each analyzed action based on the information,
the analyzing component being further adapted to add the keywords to the metadata list.

11. A system according to claim 10, wherein the actions are performed with one copy of the data item stored in the storage.

12. A system according to claim 11, wherein the storage is included in a web server, the user accessing the server for performing the action via a data network.

13. A system according to one of the claims 10-12, wherein the actions are performed using a plurality of copies of the data item, each copy being stored in a different storage in association to a unique identifier of the data item.

14. A system according to one of the claims 10-13, wherein the analyzing component is linked to an application for performing an action with the data item in such a way that the application invokes the component when an action with the data item is performed.
